(19) Europäisches Patentamt / European Patent Office / Office européen des brevets

(11) **EP 1 698 656 B2**

(12) **NEW EUROPEAN PATENT SPECIFICATION**
After opposition procedure

(45) Date of publication and mention
of the opposition decision:
**26.04.2017 Bulletin 2017/17**

(45) Mention of the grant of the patent:
**14.08.2013 Bulletin 2013/33**

(21) Application number: **04807396.9**

(22) Date of filing: **20.12.2004**

(51) Int Cl.:
**H01M 2/16** (2006.01)      **H01M 10/0525** (2010.01)
**B01D 67/00** (2006.01)

(86) International application number:
**PCT/JP2004/019039**

(87) International publication number:
**WO 2005/061599 (07.07.2005 Gazette 2005/27)**

(54) **MICROPOROUS MEMBRANE MADE FROM POLYOLEFIN**

MIKROPORÖSE MEMBRAN AUS POLYOLEFIN

MEMBRANE MICROPOREUSE EN POLYOLEFINE

(84) Designated Contracting States:
**DE FR GB HU IT**

(30) Priority: **24.12.2003 JP 2003426930**

(43) Date of publication of application:
**06.09.2006 Bulletin 2006/36**

(73) Proprietor: **ASAHI KASEI KABUSHIKI KAISHA**
**Tokyo 101-8101 (JP)**

(72) Inventors:
• **IKEMOTO, Takashi**
**5240041 (JP)**
• **KAWASOE, Shinya**
**5240021 (JP)**

(74) Representative: **D Young & Co LLP**
**120 Holborn**
**London EC1N 2DY (GB)**

(56) References cited:
JP-A- 5 021 050      JP-A- 9 180 699
JP-A- 63 251 436     JP-A- 2001 081 221
US-A- 3 903 234      US-A- 4 335 193
US-A- 4 833 172

EP 1 698 656 B2

## Description

TECHNICAL FIELD

The present invention relates to a polyolefin microporous membrane that has a good permeability and is highly strong and safe and a method for producing the membrane. In particular, the present invention relates to a polyolefin microporous membrane that is useful as electronic components, particularly a separator for high-capacity, long-life nonaqueous electrolyte batteries, a method for producing the membrane, and a nonaqueous electrolyte battery.

BACKGROUND ART

Polyolefin microporous membranes have been used so far as microfiltration membranes, battery separators, or capacitor separators. Particularly in recent years they have been used very often as separators for lithium ion secondary batteries. Currently, with the increase in power consumption, high-capacity, high-power and long-life lithium ion secondary batteries have been required.

In the circumstances, separators for lithium ion secondary batteries are required to have high permeability in addition to making the batteries thinner. To obtain a high-capacity battery, it is effective to decrease the thickness of the battery separator while increasing the amount of active materials for positive and negative electrodes. To obtain a high-power battery, it is necessary to allow ions to pass through the battery separator all at once. To allow a large amount of ions to pass through the battery separator at a time, it is effective to increase the size of pores which ions pass through.

To obtain a long-life battery, it is required to make the pores of the battery separator less likely to be clogged with impurities resulting from repeating operations of charging and discharging. In the separator having a large pore size, clogging with impurities is less likely to occur in the pores, and the battery capacity is less likely to be lowered. One index of battery life is, for example, cycle performance. The term "cycle performance" herein used means the battery capacity retention, relative to the initial capacity, when charge-discharge operations are repeated. The higher cycle performance becomes, the longer battery life becomes.

When the above described things are taken into consideration, a microporous membrane which is thin and has a large pore size is useful as a separator of high permeability.

Not only improving battery performance but also high strength and high safety of batteries have been required for suppressing the decrease in safety caused by making the batteries thinner. The term "safety" herein used is described from two aspects. One aspect of safety is the shutdown performance of separators. The separator's shutdown performance is such that when the inside of a battery is overheated, the separator is fused to serve as a coating to cover the battery electrodes, whereby current is cut off and the safety of the battery is ensured as long as the coating exists stably. One factor that contributes to the shutdown performance is pore size distribution. A separator having a narrow pore size distribution has excellent shutdown performance, since pore blocking occurs at a time when the temperature inside the battery reaches the melting point of the separator.

Another aspect of safety is the withstand voltage of separators. The withstand voltage is the separator's insulating performance in terms of voltage that allows the separator to exist as an insulator between electrodes without causing short circuit between the electrodes. As the separator becomes thinner, the distance between the electrodes becomes smaller. Therefore, the separator is required to have a higher withstand voltage. It is conceivable that the pore size largely contributes to the separator's withstand voltage. The presence of extremely large pore size portion is more likely to cause a short circuit at lower voltages.

Specifically, in a separator for high-capacity lithium ion secondary batteries, its thickness is required to be decreased and its pore size is required to be suitably large so that a high permeability could be ensured. Further, to allow the separator to have a high withstand voltage and excellent shutdown performance, a microporous membrane having a narrow pore size distribution is needed.

As one of methods for producing a microporous membrane, a phase separation method is well known. In this production method, a resin and a plasticizer are blended at high temperatures to a homogeneous state, then quenched to cause phase separation between the resin phase and the plasticizer phase, and the plasticizer is extracted and removed to obtain a microporous membrane in which the portions of the plasticizer are pores in communication with each other.

There have been disclosed techniques for producing a microporous membrane by a phase separation method, as represented by Japanese Patent No. 3347835, in which a polymer and a plasticizer are melt-kneaded and molded into a film, the film of the polymer and plasticizer mixture is stretched, and the plasticizer is extracted form the film to obtain the microporous membrane. Such a production method, in which a polymer and a plasticizer alone are used, enables a highly strong membrane to be produced; however, in the resultant membrane, there is caused a problem that its pore size is small and its permeability is low. There is also disclosed in Japanese Patent No. 2657430 a method for producing a microporous membrane in which a polymer and a plasticizer alone are used, but which requires a microporous membrane having a large pore size and a narrow pore size distribution. However, in the microporous membrane produced by the method disclosed in the patent document, the average penetration diameter and the maximum pore size are such that they prevent particles from passing through, and the pore size is smaller compared with that of the present invention obtained by the bubble point method (described later in detail). Therefore, when such a microporous membrane is used as a separator for batteries, the battery output is low and the battery life is short.

On the other hand, there have been disclosed techniques for obtaining a microporous membrane having a large pore size and excellent permeability, in which a microporous membrane is obtained by kneading an inorganic powder such as silica fine particle, together with a polyolefin resin and a plasticizer and molding the same into a film and then extracting the plasticizer and the inorganic powder from the film (for example, see JP-B-58-19689, Japanese Patent No. 2835365, JP-A-2002-88188 and Japanese Patent No. 3121047). These techniques have the advantage in that a microporous membrane having a large pore size can easily be obtained by using an inorganic powder. The reason that the use of an inorganic powder makes it possible to obtain a microporous membrane having a large pore size is probably as follows. When a polymer and a plasticizer in a molten mixed material undergoes phase separation, a plasticizer phase including the inorganic powder dispersed in the molten mixed material as a nucleus is formed. Therefore, the molten mixed material with an inorganic powder allows the size of an extractable phase (i.e., a phase including plasticizer and inorganic powder) to be larger, which in turn makes it possible to produce a microporous membrane having a large pore size.

In the light of the above-mentioned issues, in order to obtain a microporous membrane which has a moderately large pore size and a narrow pore size distribution, and thereby being useful as a separator for high-capacity lithium ion secondary batteries, it is effective to use an inorganic powder which is dispersed in a molten mixed material with its particle size kept moderate and has a narrow particle size distribution.

JP-B-58-19689 discloses a microporous membrane produced using an inorganic powder. However, in the production method of this microporous membrane, the inorganic powder is not extracted and stretching is not carried out, either. Therefore, the thickness of the resultant microporous membrane is always large and the piercing strength of the same is low. Japanese Patent No. 2835365 discloses a method for producing a microporous membrane in which a microporous membrane having a uniform pore size is produced by using hydrophobic silica whose dispersion is good. However, the technique for producing a microporous membrane disclosed in the patent document is for producing a filtration membrane. Therefore, the thickness of the microporous membrane is large and the piercing strength is low. Accordingly, the microporous membrane is different from one which the present invention aims at, that is, a microporous membrane for use in electronic components, particularly a microporous membrane useful as a separator for high-capacity nonaqueous electrolyte batteries.

JP-A-2002-88188 discloses a microporous membrane having a large pore size and excellent permeability which is produced by carrying out stretching after the extraction of the inorganic powder. However, the technique disclosed in the patent document does not use an inorganic powder having a narrow dispersion particle size distribution. Moreover since the microporous membrane obtained by the technique has a wide pore size distribution, the membrane has a low withstand voltage and poor piercing strength, and its safety is poor when the thickness is decreased.

Japanese Patent No. 3121047 discloses a microporous membrane having a narrow pore size distribution. The technique disclosed in the patent document does not use an inorganic powder having a narrow dispersion particle size distribution, either. The microporous membrane obtained by the technique has a large thickness, a high void content and a low piercing strength. Further, the pore size distribution of the microporous membrane disclosed in the document is not sufficiently narrow as referred to in the present invention. Therefore, the microporous membrane is different from one which the present invention aims at, that is, a microporous membrane that is useful as a separator for high-capacity nonaqueous electrolyte batteries.

JP 63251436 discloses a process for the production of a porous sheet. In the process, a polyolefin resin is mixed with a filler and a plasticizer. The mixture is melt-molded, and the obtained sheet is stretched to produce a porous sheet.

US 4,833,172 discloses a precursor microporous material comprising a matrix consisting essentially of linear ultrahigh molecular weight polyolefin, a large proportion of finely divided water-insoluble siliceous filler, and interconnecting pores wherein the precursor is stretched to increase the porosity and provide regions of stretch-induced molecularly oriented polymer in the matrix.

JP 2001081221 discloses a mixture comprising a polyolefin with a viscosity average molecular weight of 150,000-1,000,000 and a plasticizer. The mixture is melted and kneaded, molded into a sheet, cooled and solidified. This sheet is inserted 10-100 mm inside from the edge into holding chucks of an extruder to hold the sheet to biaxially stretch the sheet. Subsequently, the solvent is extracted and the sheet is stretched at least in one direction.

As described so far, a microporous membrane for electronic components which is highly strong and safe and has high permeability when a separator is made thinner, a method for producing such a microporous membrane, and nonaqueous electrolyte batteries which use the separator having these characteristics, and thereby possessing high-capacity, long life and high safety have not been obtained.

Accordingly, an object of the present invention is to provide a polyolefin microporous membrane that has a good permeability and is highly strong and safe. Another object of the present invention is to provide a polyolefin microporous membrane that is useful as electronic components, particularly a separator for high-capacity, long-life nonaqueous electrolyte batteries and a method for producing the same. Still another object of the present invention is to provide a nonaqueous electrolyte battery.

DISCLOSURE OF THE INVENTION

After directing tremendous research efforts towards accomplishing the above described objects, the present inventors have found that a polyolefin microporous membrane having a narrow pore size distribution, while keeping the pore size moderate, and a high piercing strength exhibits a high permeability and high safety when used as a separator. In particular, it is useful as electronic components, particularly a separator for high-capacity nonaqueous electrolyte batteries. The present inventors have also found that use of a separator having such characteristics makes it possible to obtain a high-capacity, long-life and highly safe nonaqueous electrolyte battery.

The present inventors have also found that it is essential, in the method for producing a polyolefin microporous membrane that is highly permeable, highly strong and highly safe, to use an inorganic powder that has a narrow particle size distribution and is dispersible with its particle size kept appropriate.
As a result, the present inventors have accomplished the present invention.

Specifically, the attributes of the present invention are as follows:

1. A polyolefin microporous membrane having a membrane thickness of 1 to 30 $\mu$m, a void content of 30 to 60%, a gas transmission rate of 5000 to 25000 sec/m$^3$ (50 to 250 sec/100 cc), a piercing strength of 3.5 to 20.0 N/20 $\mu$m, a maximum pore size determined by the bubble point method of 0.08 to 0.20m, and a ratio of the maximum pore size to the average pore size (the maximum pore size/the average pore size) of 1.00 to 1.40 wherein the void content is calculated from the following equation: void content (%) = [{volume (cm$^3$) - (mass (g)/density of polyethylene (g/cm$^3$))}/volume (cm$^3$)] x 100; the gas transmission rate is measured in accordance with JIS p-8117; the piercing strength is measured under the conditions where the radius of curvature of the needle is 0.5 mm and the piercing speed is 2 mm/sec; and the average pore size is measured by the half-dry method.

2. Use of the polyolefin microporous membrane as defined above, in electronic components.

3. Use of the polyolefin microporous membrane as defined above as a polyolefin separator for nonaqueous electrolyte batteries.

4. A nonaqueous electrolyte battery comprising a separator, characterized in that the polyolefin microporous membrane as defined above is used as the separator.

5. A method for producing a polyolefin microporous membrane as defined above comprising: providing a mixture of polyolefin resin, a plasticizer and an inorganic powder wherein in the total amount of these three components, the content of the polyolefin resin is 10 to 50 % by weight, the content of the plasticizer is 30 to 70 % by weight and the content of the inorganic powder is 5 to 40 % by weight; molding said mixture into a sheet while kneading and heat melting the mixture; extracting and removing the plasticizer and the inorganic powder from the sheet, respectively; and stretching the sheet at least uniaxially, wherein the inorganic powder has an average dispersion particle size of 0.01 to 5 $\mu$m and the ratio of the 95 vol% cumulative dispersion particle size and the 5 vol% cumulative dispersion particle size is 1.0 to 10.0, wherein the average dispersion particle size of the inorganic powder is measured using a laser diffraction particle size analyser under the following conditions: solvent of 86.4% ethanol, 7.3% methanol, water 6.3%; dispersion conditions of 40 VV ultrasonics for 10 minutes while stirring at 200 rpm; set value of refractive index of silica: real part 1.40, imaginary part 0; measuring temperature of 25°C.

6. The method as defined above, wherein the inorganic powder is silica powder.

7. The method as defined above, wherein the inorganic powder is silica powder prepared by a dry process.

According to the present invention, a microporous membrane excellent in permeability, strength and safety can be provided. Further, a microporous membrane for use in electronic components can be provided, in particular, a polyolefin separator for nonaqueous electrolyte batteries which is useful as a separator for high-capacity, long-life non-aqueous electrolyte batteries can be provided. The microporous membrane according to the present invention can exhibit the above described effects even when its thickness is decreased compared with the thickness of conventional microporous membranes. Use of this microporous membrane as a separator makes it possible to obtain nonaqueous electrolyte batteries that have high-capacity, long-life and high safety.

BRIEF DESCRIPTION OF THE DRAWINGS

Fig. 1 is a plan view showing a slide glass with a nickel foil which is used when measuring fuse temperatures and short temperatures;
Fig. 2 is a schematic drawing of an apparatus for measuring fuse temperatures and short temperatures;
Fig. 3 is a graph showing the transition in impedance of Example 1 and that of Comparative Example 1;
Fig. 4 is an enlarged view of the impedance of Example 1; and
Fig. 5 is an enlarged view of the impedance of Comparative Example 1.

BEST MODE FOR CARRYING OUT THE INVENTION

The present invention will be described below in detail with respect to its preferred embodiments.
The membrane thickness of a microporous membrane according to the present invention is 1 to 30 $\mu$m, preferably 1 to 27 $\mu$m, more preferably 1 to 25 $\mu$m, further more preferably 1 to 22 $\mu$m and most preferably 1 to 20 $\mu$m. If the membrane thickness is smaller than 1 $\mu$m, the mechanical strength and the safety at the time of shutdown are both worse, while if the membrane thickness is greater than 30 $\mu$m, the permeability is lowered, which results in an inferior separator for high-capacity batteries.
The void content of the microporous membrane is 30 to 60% and preferably 35 to 55%. If the void content is lower than 30%, the permeability is worse, while if the void content is higher than 60%, the mechanical strength and the safety at the time of shutdown are both worse.
The gas transmission rate of the microporous membrane is 50 to 250 sec/100 cc, preferably 50 to 200 sec/100 cc and more preferably 50 to 150 sec/100 cc. If the gas transmission rate is lower than 50 sec/100 cc, the safety at the time of shutdown is worse, while if the gas transmission rate is higher than 250 sec/100 cc, the permeability is worse.
The piercing strength of the microporous membrane in terms of 20 $\mu$m is 3.5 to 20.0 N and preferably 4.0 to 20.0 N. If the piercing strength in terms of 20 $\mu$m is lower than 3.5 N, the membrane strength is low, the membrane is more likely to be torn, and the membrane is inferior in safety.
The maximum pore size of the microporous membrane obtained by the bubble point method is 0.08 to 0.20 $\mu$m, preferably 0.09 to 0.20 $\mu$m, more preferably 0.10 to 0.20 $\mu$m and most preferably 0.10 to 0.15 $\mu$m. If the maximum pore size is smaller than 0.08 $\mu$m, the membrane is inferior in permeability, while if the maximum pore size is larger than 0.20 $\mu$m, the membrane is inferior in both safety at the time of shutdown and withstand voltage.
The ratio of the average pore size to the maximum pore size is 1.00 to 1.40. If the ratio is larger than 1.40, the pore size distribution is wide, the pore size is non-uniform, and the safety at the time of shutdown and withstand voltage are inferior.
Further, the temperature range during shutdown of a microporous membrane according to the present invention is preferably 7°C or lower, more preferably 5°C or lower, and most preferably 4°C or lower. From the viewpoint of security at the time of shutdown, the temperature from the initiation of shutdown to the completion of current interruption is preferably 5°C or lower. Higher safety is ensured when the temperature difference between the time when the membrane starts to melt and the time when shutdown is completed is smaller and the length of time spent in the same is shorter.
As an index of permeability, the ratio of gas transmission rate to polymer content (= 100 - void content) (that is, gas transmission rate/polymer content) can be used. Microporous membranes in which the ratio is low have a high permeability even if they contain a large amount of polymer, and they are useful as a highly permeable and safe separator.
From the viewpoint of permeability and safety, preferably the ratio of gas transmission rate to polymer content is 2.5 or lower, more preferably 2.3 or lower, and most preferably 2.0 or lower.
The withstand voltage in terms of 20 $\mu$m is, considering the suppression of electrical short when high voltage is applied, preferably 0.8 KV or higher, more preferably 1.0 KV or higher, and most preferably 1.2 KV or higher.
One example of the methods for producing a microporous membrane according to the present invention is shown by the following steps (a) to (e):

(a) a step of mixing a polyolefin resin, a plasticizer, an inorganic powder and additives and granulating the mixture in a Henschel mixer or the like;
(b) a step of melt-kneading the mixture prepared in the step (a) on an extruder with a T die mounted on its leading edge;
(c) a step of molding the kneaded material obtained in the step (b) into a sheet by extruding the kneaded material from the T die, rolling the extruded material from both sides with a heat roll, followed by cooling;

(d) a step of extracting and removing the plasticizer and inorganic powder from the molded product in the form of a sheet, followed by drying; and

(e) a step of stretching the molded product in the form of a sheet at least axially and heat treating the same.

Examples of inorganic powders usable in the step (a) of the production method of the present invention include: silica, calcium silicate, aluminum silicate, alumina, calcium carbonate, magnesium carbonate, kaolin clay, talc, titanium oxide, carbon black and diatomaceous earth. Either one of them alone or several of them in the form of a mixture may be used. The inorganic powder preferably used in the present invention is silica, particularly preferably silica prepared by a dry process.

The average dispersion particle size of the inorganic powder is 0.01 to 5 $\mu$m, preferably 0.05 to 3 $\mu$m, and more preferably 0.1 to 1 $\mu$m. Inorganic fine particles, represented by silica, have a strong aggregation force and usually form aggregates. Therefore, they are less likely to exist in the state of the primary particle (one fine particle not forming an aggregate). The term average of dispersion particle size referred to herein does not mean the average of primary particle size, but that of inorganic particles in the aggregated and dispersed state. The important thing in a fine particle mixture system is the state in which fine particles are dispersed. If the average dispersion particle size is smaller than 0.01 $\mu$m, the fine particles are dispersed in too fine a state when used in the production of a microporous membrane. This results in a microporous membrane having a poor permeability. On the other hand, if the average dispersion particle size is larger than 5 $\mu$m, the inorganic fine particles exist in too large a state in the membrane when used in the production of a microporous membrane. This results in a microporous membrane having a non-uniform structure and not having high strength and safety.

The ratio of the 95 vol% cumulative dispersion particle size of the inorganic powder to the 5 vol% cumulative dispersion particle size of the inorganic powder (that is, the former value/the latter value) is 1.0 to 10.0, preferably 1.0 to 7.0 and more preferably 1.0 to 5.0. The term "5 vol% cumulative dispersion particle size" means the particle size at which the cumulative volume fraction of particles integrated from the smaller particle size to the larger particle size reaches 5% in the entire inorganic powder used. Likewise, the term "95 vol% cumulative dispersion particle size" means the particle size at which the cumulative volume fraction of particles integrated from the smaller particle size to the larger particle size reaches 95% in the entire inorganic powder used. The cumulative dispersion particle size ratio shows the dispersed state of the inorganic fine particles at the time of measuring the average dispersion particle size. If the cumulative dispersion particle size ratio of the inorganic powder is more than 10.0, the dispersion of the inorganic particles in the membrane is not uniform, whereby the membrane structure is not uniform and a highly strong and safe microporous membrane cannot be obtained.

A method for producing a silica powder, as a typical example of inorganic powder, will be described below. Methods for synthesizing a silica powder are generally classified into three major groups according to the characteristics: a dry method in which the synthesis is performed under high temperatures of 100°C or more; a wet method in which sodium silicate, mineral acid and salts are reacted in an aqueous solution; and an aerogel method in which sodium silicate and mineral acid are reacted to form silica gel, water in the gel is then replaced with an organic solvent, and the resultant organogel is heat treated under pressure.

As the dry method, a combustion method in which gasified silicon tetrachloride is burned in the air to obtain very fine silica particles is often used. Besides this combustion method, there is a heating method in which the SiO vapor obtained by heating silica sand and coke is oxidized in the air to obtain silica particles larger than those obtained by the combustion method.

As the wet method, there are: a sedimentation method in which the reaction of sodium silicate and a mineral acid is conducted while changing the pH of the reaction solution to that of alkaline solution, thereby increasing the growth rate of silica particles so that the silica particles are aggregated into a flock to be settled down; and a gel method in which the reaction of sodium silicate and a mineral acid is conducted while changing the pH of the reaction solution to that of acidic solution, thereby suppressing the growth rate of silica particles and allowing silica particles to be aggregated so that the silica is aggregated and the reaction solution is gelled.

In the present invention, silica synthesized by any one of the above described methods can be used; however, considering the dispersion of the silica powder, silica synthesized by the dry method is preferably used. The reason is that in dry silica, the aggregation force among its particles is weak compared with wet silica, and therefore, the dry silica exhibits high dispersion properties in the mixing step (a) or in the melt-kneading step (b) using an extruder.

Even in wet silica which has a stronger aggregation force compared with dry silica, if it is ground and classified after synthesized, silica having a small average dispersion particle size and a uniform particle size can be obtained. In wet silica, it is also preferred that such ground and classified silica is used.

Silica with hydrophobic surface is also known which is obtained by subjecting the surface of synthesized silica to hydrophobic treatment. However, considering dispersion properties in a membrane, handling during production of membrane and cost, hydrophilic silica is preferable. The oil absorption of a silica powder is preferably 100 to 400 ml/100 g and more preferably 150 to 300 ml/100 g, considering the dispersion properties of the polyolefin resin and plasticizer used.

The polyolefin resin used in the present invention may be composed of a single polyolefin or may be a polyolefin composition that includes several kinds of polyolefins. Examples of polyolefin usable in the present invention include: polyethylene, polypropylene and poly-4-methyl-1-pentene. Two or more kinds of these polyolefins may be used in the form of a blend. To realize a highly permeable microporous membrane, it is preferable to use polyethylene alone.

Kinds of polyethylene usable in the present invention include: for example, high-density polyethylene with a density higher than 0.94 g/cm$^3$; medium-density polyethylene with a density in the range of 0.93 to 0.94 g/cm$^3$; and low-density polyethylene with a density lower than 0.93 g/cm$^3$; and linear low-density polyethylene. To increase the membrane strength, it is preferable to use high-density polyethylene and medium-density polyethylene. Either high-density polyethylene or medium-density polyethylene alone or a mixture thereof may be used.

To realize high strength of the microporous membrane, preferably 5 to 90% by weight, and considering the moldability, more preferably 10 to 80% by weight of ultra-high-molecular-weight polyethylene with an intrinsic viscosity [η] of about 5 to 20 dl/g is added. To obtain high permeability of the microporous membrane, preferably 10 to 95% by weight of high-density polyethylene is added.

In terms of molecular weight distribution, polyethylene having a narrow molecular weight distribution prepared using a metallocene catalyst or polyethylene having a wide molecular weight distribution prepared by two-step polymerization can also be used.

Kinds of polypropylene usable in the present invention include: for example, propylene homopolymer, ethylene-propylene random copolymer, and ethylene-propylene block copolymer. The content of ethylene in the total amount of polypropylene used is preferably 0 to 3 mol%, and the polypropylene used is preferably composed of propylene homopolymer alone. The [η] of the polypropylene used is preferably 1 to 25 dl/g and more preferably 2 to 7 dl/g.

Examples of plasticizer usable in the present invention include: organic acid esters such as phthalate esters such as dioctyl phthalate, diheptyl phthalate and diburyl phthalate, adipate esters and glycerin esters; phosphate esters such as trioctyl phosphate; liquid paraffin; solid wax; and mineral oil. Taking into consideration the compatibility with polyethylene, phthalate esters are preferable. Either one of these plasticizers alone or a mixture thereof may be used.

Regarding mixing ratio of the polyolefin resin, a plasticizer and an inorganic powder in the production method of the present invention, to increase the strength of the microporous membrane, the content of polyolefin resin in the total amount of these three components is preferably 10 to 50% by weight and more preferably 20 to 40% by weight. To obtain better moldability and suitable pore size of the microporous membrane, the content of plasticizer is preferably 30 to 70% by weight and more preferably 40 to 60% by weight. To obtain suitable pore size of the microporous membrane and increase the strength of the microporous membrane, the content of inorganic powder is preferably 5 to 40% by weight and more preferably 10 to 30% by weight.

In addition to polyolefin, inorganic powder and plasticizer, various additives such as antioxidant, antistatic agent, ultraviolet absorber, lubricant or anti-blocking agent can also be added, if necessary, so long as the addition does not impair the effects of the present invention.

A conventional mixing method with a blender such as Henschel mixer, V-blender, Proshear mixer or a ribbon blender can be sufficiently used for mixing the three components, polyolefin, inorganic powder and plasticizer.

In the step (b), the mixture is kneaded with a melt-kneading equipment such as extruder or kneader. The resultant kneaded material is molded into a sheet by melt-molding using a T die. In this molding operation, it is preferable from the view point of dimensional stability to carry out molding via a gear pump and it is particularly preferable from the view point of dimensional stability to carry out molding while keeping the pressure before the gear pump constant.

The step (c) may be conducted by: a cooling method by air; a cooling method in which the resin is brought into contact with the roll whose temperature is adjusted to 20 to 120°C lower than the resin temperature extruded from the T die; or a cooling method in which the resin is cooled while subjecting the resin to calendering-molding into a sheet with calender rolls whose temperature is adjusted to 20 to 120°C lower than the resin temperature extruded from the T die. It is preferable from the viewpoint of obtaining a membrane of a uniform thickness to adopt the cooling process in which the resin is cooled while subjecting the resin to calendering-molding into a sheet with calender rolls whose temperature is adjusted to 20 to 120°C lower than the resin temperature extruded from the T die. In this case, when the roll is used, it is preferred that the molding is carried out while keeping the distance between the T die and the point at which the rolls come into contact with the sheet within the range of 5 to 500 mm. The temperature of the resin extruded from the T die can be measured with a normal thermocouple thermometer by bringing the terminal of the thermocouple thermometer into contact with the extruded resin while avoiding the contact of the terminal with the die.

In the step (d), the plasticizer and the inorganic powder in the membrane are extracted with a solvent. Examples of solvent usable for extraction of plasticizers include: for example, organic solvents such as methanol, ethanol, methyl ethyl ketone and acetone; ketones such as acetone and methyl ethyl ketone; ethers such as tetrahydrofuran; and halogenated hydrocarbons such as methylene chloride and 1,1,1-trichloroethane. Either any one of these solvents alone or a mixture thereof may be used. After extraction of the plasticizer, extraction of the inorganic powder is carried out. Examples of solvent usable for extraction of inorganic powder include alkaline aqueous solutions such as sodium hy-

7

droxide and potassium hydroxide.

In the step (e), the aforementioned membrane from which the plasticizer and the inorganic powder have been extracted is stretched at least uniaxially. When stretching is performed uniaxially, either roll stretching or stretching using tenter may be used. In view of the increase in strength and the decrease in thickness of the microporous membrane, biaxial stretching is preferable. Further in view of the increase in strength and the decrease in thickness of the microporous membrane, the stretching rate of the membrane is preferably 6 times or greater in terms of area stretching rate and more preferably 8 times or greater. When biaxial stretching is carried out, either sequential biaxial stretching or simultaneous biaxial stretching may be used. Sequential biaxial stretching is preferably used to obtain a microporous membrane having a large pore size and high permeability. In this case, a single membrane or a plurality of superposed membranes can be stretched. From the viewpoint of obtaining a membrane having high strength, it is preferable to stretch a plurality of superposed membranes. Following the stretching or with an interval after the completion of the stretching, heat treatment such as heat set or thermal relaxation may be carried out.

The present invention will be described below in further detail by Examples.

Test methods used in Examples are as follows.

(1) Average dispersion particle size of inorganic powder ($\mu$m)

Measurement was made under the following conditions using a laser diffraction particle size analyzer manufactured by Shimadzu Corporation. The median diameter obtained by the measurement was defined as the average dispersion particle size of the inorganic powder.

Solvent: industrial alcohol, EKINEN F-8, manufactured by Japan Alcohol Trading
Composition ... ethanol 86.4%, methanol 7.3%, water 6.3%
Dispersing conditions: Exposed to 40 W ultrasonics for 10 minutes while stirring at 200 rpm and then measured.
Set value of refractive index of silica: real part ... 1.40; imaginary part ... 0
Measuring temperature: 25°C

(2) Ratio of cumulative dispersion particle size

The ratio was calculated from the following equation using the values measured on the analyzer described in (1).
The ratio of cumulative dispersion particle size = 95 vol% cumulative dispersion particle size/5 vol% cumulative dispersion particle size

(3) Oil absorption (ml/100 g)

Measurement was made in accordance with JIS K5101-1991 using DOP.

(4) Membrane thickness ($\mu$m)

Measurement was made using a dial gauge (PEACOCK No. 25 manufactured by OZAKI MFG. CO., LTD.). Measurement was made at a plurality of points per sample and the average value of the measurements was used as the membrane thickness.

(5) Void content (%)

A sample by 20 cm square was taken, and the void content was calculated from the following equation using the volume and mass of the sample.

$$\text{Void content (\%)} = [\{\text{volume (cm}^3\text{)} - (\text{mass (g)}/\text{density of polyethylene (g/cm}^3\text{))}\}/\text{volume (cm}^3\text{)}] \times 100 \text{ (\%)}$$

(6) Gas transmission rate (sec/0.1 dm$^3$)

Measurement was made using a Gurley type gas transmission rate tester in accordance with JIS p-8117.

(7) Piercing strength (N)

The maximum piercing load (N) was measured by conducting piercing test using a handy compression testing machine, KES-G5, manufactured by KATO TECH CO., LTD. under the conditions: the radius of curvature of needle tip was 0.5 mm and the piercing speed was 2 mm/sec. The piercing strength in terms of 20 $\mu$m was obtained by multiplying the measured value by 20 ($\mu$m)/membrane thickness ($\mu$m).

(8) Maximum pore size (by bubble point method) ($\mu$m)

The maximum pore size was calculated in accordance with ASTM E-128-61 using the value of the bubble point in ethanol.

(9) Average pore size (by half-dry method) ($\mu$m)

The average pore size was calculated in accordance with ASTM F-316-86 using ethanol.

(10) Pore size ratio

The pore size ratio was determined from the following equation using the maximum pore size and the average pore size determined in (8) and (9).

$$\text{Pore size ratio = maximum pore size } (\mu m)/\text{average pore size } (\mu m)$$

(11) Electric resistance ($\Omega cm^2$)

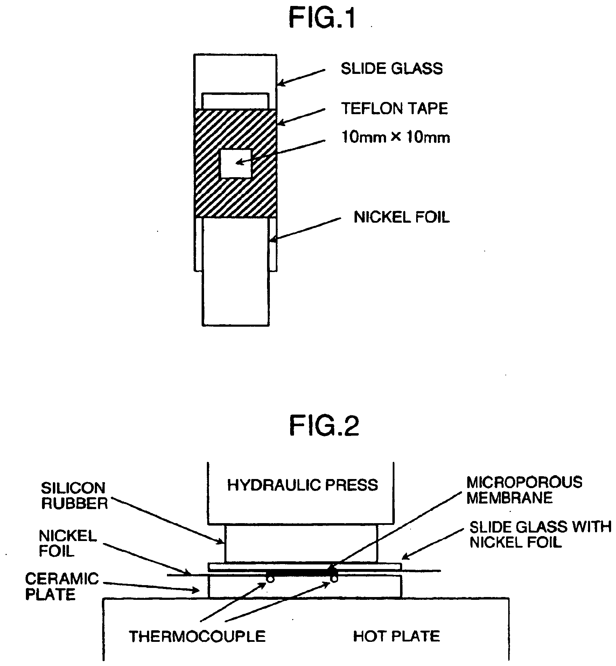

Measurement was made of resistance using an LCR meter AG-43 manufactured by Ando Electric Co., Ltd. and a cell shown in Fig. 1 by applying an alternating current of 1 kHz and the electric resistance was calculated from the following equation.

$$\text{Electric resistance } (\Omega cm^2) = (\text{resistance value when the membrane exists} - \text{resistance value when the membrane does not exist}) \times 0.785$$

The measuring conditions were as follows. Electrolyte: a solution of 1 mol/liter lithium perchlorate in the mixture of propylene carbonate and diethoxyethane (50/50 vol%), Electrode: platinum black, Area of electrode plate: 0.785 cm$^2$, Interelectrode distance: 3 mm

(12) Temperature during shutdown (°C)

As shown in Fig. 1, 2 sheets of nickel foil 10 $\mu$m thick (A, B) were prepared, and one of the nickel foil sheets A was fixed on a slide and masked with a Teflon tape with its 10 mm by 10 mm square portion left unmasked

As shown in Fig. 2, another nickel foil sheet B was placed on a ceramic plate to which a thermocouple was connected. On the ceramic plate with the nickel foil sheet B stuck thereon, a microporous membrane as a sample to be measured, which was immersed in a specified electrolyte for 3 hours in advance, was placed. Then, the slide with a nickel foil sheet stuck thereon and silicone rubber were placed in this order.

The above ceramic plate was then set on a hot plate and heated up at a rate of 15°C/min under a pressure of 1.5 MPa by a hydraulic press. The change in impedance during the heat-up was measured while applying an alternating current 1V of 1 kHz.

The shutdown speed was obtained as follows using the above measurements. A graph was prepared by plotting temperature in the horizontal axis and Log (Impedance) in the longitudinal axis, a tangent was drawn to the curve at a point where the impedance was 100 $\Omega$, and the temperature during shutdown was determined using the points where the tangent intersects 1 $\Omega$ and 1000 $\Omega$.

$$\text{Temperature during shutdown (°C)} =$$

$$\text{(temperature at which the tangent intersects 1000 } \Omega$$

$$\text{(°C) - temperature at which the tangent intersects 1 } \Omega$$

$$\text{(°C))}$$

The composition of the specified electrolyte was as follows.

Composition of solvent (volume ratio): propylene carbonate/ethylene carbonate/$\delta$ - butyrolactone = 1/1/2

Composition of electrolyte: $LiBF_4$ was dissolved in the above solvent so that the concentration was 1 mol/liter and then trioctyl phosphate was added so that the concentration was 0.5% by weight.

(13) Intrinsic viscosity (dl/g)

The intrinsic viscosity [$\eta$] of polyolefin as a raw material and that of the membrane were determined by measuring the intrinsic viscosities [$\eta$] in decalin solvent at 135°C in accordance with ASTM D4020.

(14) Withstand voltage (KV) of microporous membrane

A microporous membrane was put between aluminum electrodes 4 cm in diameter and a load of 15 g was applied to them. The microporous membrane together with the aluminum electrodes were connected to a withstand voltage tester (TOS9201) manufactured by KIKUSUI ELCTRONICS CORP. to measure the withstand voltage. The measurement was conducted while applying an alternating voltage (60 Hz) at a rate of 1.0 KV/sec, and the voltage at which short-circuit occurred was defined as the measured value of the withstand voltage of the microporous membrane. The withstand voltage in terms of 20 $\mu$m was determined by multiplying the measured value by 20 ($\mu$m)/membrane thickness ($\mu$m).

(Evaluation of Battery)

To carry out evaluations of battery, electrodes and an electrolyte were prepared as follows.

Preparation of positive electrode

100 parts by weight of lithium cobalt hybrid oxide $LiCoO_2$ as a positive active material, 2.5 parts by weight of flake graphite and 2.5 parts by weight of acetylene black as conducting agents, and 3.5 parts by weight of polyvinylidene fluoride as a binder, were dispersed in N-methylpyrrolidone (NMP) to prepare a slurry. The slurry was coated on both sides of an aluminum foil 20 $\mu$m thick, which is to be an anode current collector, with a die coater, dried at 130°C for 3 minutes, and compression molded with a roll press equipment. The coating was conducted so that the amount of the active material for the positive electrode was 250 g/m$^2$ and the bulk density of the active material was 3.00 g/cm$^3$. The aluminum foil having been coated with the active materials were cut to the battery width into a strip.

Preparation of negative electrode

90 parts by weight of graphitized mesophase-pitch-based carbon fiber (MCF) and 10 parts by weight of flake graphite, as negative active materials, 1.4 parts by weight of ammonium salt of carboxymethylcellulose and 1.8 parts by weight of styrene-butadiene copolymer latex, as binders, were dispersed in purified water to prepare a slurry. The slurry was coated on both sides of copper foil 12 $\mu$m thick, which is to be a cathode current collector, with a die coater, dried at 120°C for 3 minutes, and compression molded with a roll press equipment. The coating was conducted so that the amount of the active material for the negative electrode was 106 g/m$^2$ and the bulk density of the active material was 1.35 g/cm$^3$. The copper foil having been coated with the active materials were cut to the battery width into a strip.

Preparation of nonaqueous electrolyte

A nonaqueous electrolyte was prepared by dissolving $LiPF_6$ as a solute in a mixed solvent of ethylene carbonate : ethyl methyl carbonate = 1 : 2 (volume ratio) so that the concentration of $LiPF_6$ was 1.0 mol/liter.

(15) Withstand voltage of battery (KV)

Microporous membrane separators, a strip positive electrode and a strip negative electrode to be evaluated were prepared, and a layered structure of electrode plates was prepared by superposing the strip negative electrode, one of the separators, the strip positive electrode and the other separator in this order and spirally winding the superimposed material several times. The electrode-plate layered structure was pressed to be flat and contained in an aluminum container, and an aluminum lead was led out from the anode current collector and welded to the cap of the battery, while a nickel lead was led out from the cathode current collector and welded to the bottom of the container to produce a jelly roll.
The withstand voltage of the jelly roll was measured under the same conditions as in (14) and was defined as the battery withstand voltage.

(16) Cycle performance

A lithium ion battery was prepared by injecting the above described nonaqueous electrolyte into the jelly roll prepared in (15) and sealing the opening.
The battery was charged up to 4.2 V by applying a charge current of 1A and discharged to 3 V by applying a charge current of 1A under the temperature of 25°C. This charge-discharge operation was taken as a cycle and the cycle was repeated. The proportion of the battery capacity after 500 times of the cycle to the initial capacity (capacity retention) was defined as cycle performance.

[Example 1]

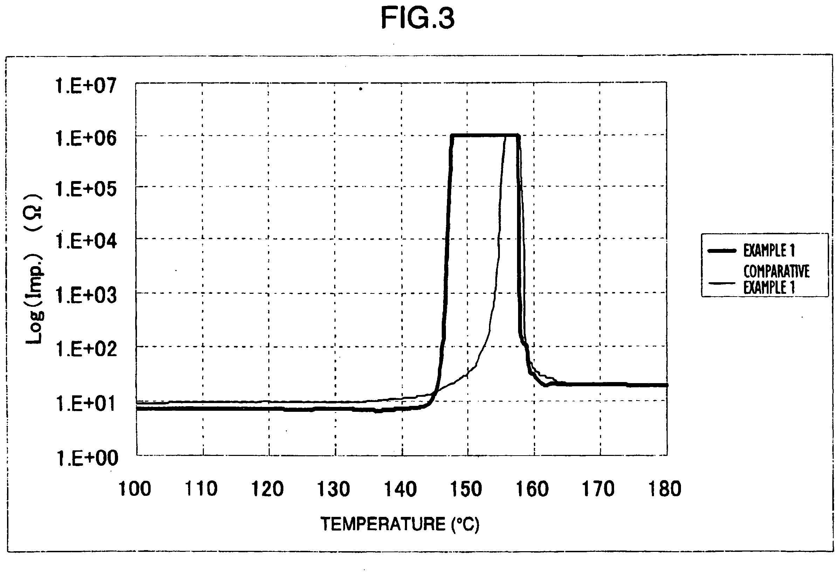

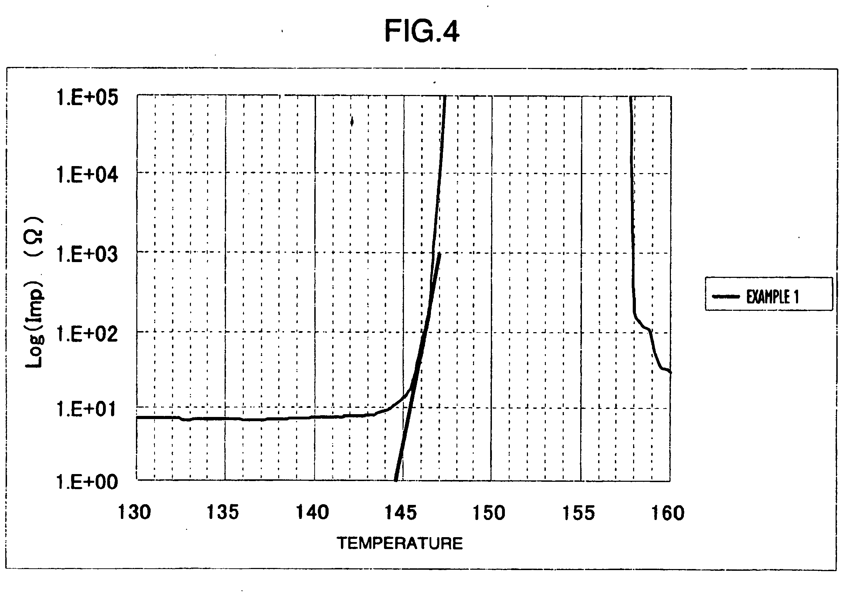

20% by weight of silica powder A, which was prepared by a dry process and had an average dispersion particle size of 0.25 $\mu$m, a 95 vol% cumulative dispersion particle size of 0.45 $\mu$m, a 5 vol% cumulative dispersion particle size of 0.15 $\mu$m, a ratio of cumulative dispersion particle size of 3.0, an oil absorption of 240 ml/100 g and a primary particle size of 12 nm (see Table 1), 19.2% by weight of an ultra-high-molecular-weight polyethylene with [$\eta$] of 7.0 dl/g, 12.8% by weight of a high-density polyethylene with [$\eta$] of 2.8 dl/g and 48% by weight of dioctyl phthalate (DOP) were mixed and granulated. The granulated mixture was then kneaded and extruded with a twin-screw extruder equipped with a T die into a sheet 90 $\mu$m thick. From this molded sheet, DOP was extracted and removed with methylene chloride and the silica powder was also extracted and removed with sodium hydroxide to produce a microporous membrane. Two sheets of the microporous membranes were superposed, stretched lengthwise to 4.5 times while heating at 110°C, and stretched widthwise to 2.0 times while heating at 130°C. The physical properties of the resultant membrane are shown in Table 2. The chart of the temperature measured during shut down of the membrane is shown in Figs. 3, 4. The battery evaluation was also conducted using this membrane. The results of the battery evaluation are also shown in Table 2.

[Example 2]

Two sheets of the membranes, where the silica powder had been extracted, produced in the same manner as in Example 1 were superposed, stretched lengthwise to 5.0 times while heating at 115°C, and stretched widthwise to 2.2 times while heating at 133°C. The physical properties of the resultant membrane are shown in Table 2.

[Example 3]

Two sheets of the membranes, where the silica powder had been extracted, produced in the same manner as in Example 1 were superposed, stretched lengthwise to 6.0 times while heating at 117°C, and stretched widthwise to 2.5 times while heating at 135°C. The physical properties of the resultant membrane are shown in Table 2.

[Example 4]

20.6% by weight of silica powder A, which was the same as that used in Example 1, 10.2% by weight of an ultra-high-molecular-weight polyethylene with [$\eta$] of 11.5 dl/g, 10.2% by weight of a high-density polyethylene with [$\eta$] of 1.8 dl/g, 13.6% by weight of a linear low-density polyethylene with [$\eta$] of 1.8 dl/g, and 45.4% by weight of DOP were mixed and granulated. The granulated mixture was then kneaded and extruded with a twin-screw extruder equipped with a T die into a sheet 90 $\mu$m thick. From this molded sheet, DOP was extracted and removed with methylene chloride and the silica powder was also extracted and removed with sodium hydroxide to produce a microporous membrane. Two sheets of the microporous membranes were superposed, stretched lengthwise to 4.5 times while heating at 115°C, and stretched widthwise to 2.0 times while heating at 120°C. The physical properties of the resultant membrane are shown in Table 2.

[Example 5]

20.6% by weight of silica powder A, which was the same as that used in Example 1, 3.4% by weight of an ultra-high-molecular-weight polyethylene with [η] of 11.5 dl/g, 6.8% by weight of an ultra-high-molecular-weight polyethylene with [η] of 7.0 dl/g, 10.2% by weight of a low-density polyethylene with [η] of 3.8 dl/g, 13.6% by weight of a linear low-density polyethylene with [η] of 1.8 dl/g, and 45.4% by weight of DOP were mixed and granulated. The granulated mixture was then kneaded and extruded with a twin-screw extruder equipped with a T die into a sheet 90 μm thick. From this molded sheet, DOP was extracted and removed with methylene chloride and the silica powder was also extracted and removed with sodium hydroxide to produce a microporous membrane. Two sheets of the microporous membranes were superposed, stretched lengthwise to 5.0 times while heating at 115°C, and stretched widthwise to 2.0 times while heating at 120°C. The physical properties of the resultant membrane are shown in Table 2. The battery evaluation was also conducted using this membrane. The results of the battery evaluation are also shown in Table 2.

[Example 6]

Two sheets of the membranes, where the silica powder had been extracted, produced in the same manner as in Example 5 were superposed, stretched lengthwise to 5.5 times while heating at 115°C, and stretched widthwise to 2.0 times while heating at 122°C. The physical properties of the resultant membrane are shown in Table 2.

[Example 7]

20.6% by weight of silica powder A, which was the same as that used in Example 1, 10.2% by weight of an ultra-high-molecular-weight polyethylene with [η] of 5.5 dl/g, 10.2% by weight of a low-density polyethylene with [η] of 3.8 dl/g, 13.6% by weight of a linear low-density polyethylene with [η] of 1.8 dl/g, and 45.4% by weight of DOP were mixed and granulated. The granulated mixture was then kneaded and extruded with a twin-screw extruder equipped with a T die into a sheet 90 μm thick. From this molded sheet, DOP was extracted and removed with methylene chloride and the silica powder was also extracted and removed with sodium hydroxide to produce a microporous membrane. Two sheets of the microporous membranes were superposed, stretched lengthwise to 5.0 times while heating at 115°C, and stretched widthwise to 2.0 times while heating at 120°C. The physical properties of the resultant membrane are shown in Table 2.

[Example 8]

A microporous membrane was produced in the same manner as in Example 5, except that silica powder B was used, which was prepared by a dry process and had an average dispersion particle size of 0.30 μm, a 95 vol% cumulative dispersion particle size of 0.50 μm, a 5 vol% cumulative dispersion particle size of 0.13 μm, a ratio of cumulative dispersion particle size of 3.8, oil absorption of 220 ml/100 g and a primary particle size of 20 nm (see Table 1). The physical properties of the resultant membrane are shown in Table 2. The battery evaluation was also conducted using this membrane. The results of the battery evaluation are also shown in Table 2.

[Example 9]

20% by weight of silica powder C, which was prepared by a dry process and made hydrophobidized with dimethyldichlorosilane, having an average dispersion particle size of 0.27 μm. a 95 vol% cumulative dispersion particle size of 0.55 μm, a 5 vol% cumulative dispersion particle size of 0.16 μm, a ratio of cumulative dispersion particle size of 3.4, oil absorption of 280 ml/100 g and a primary particle size of 12 nm (see Table 1), 19.2% by weight of an ultra-high-molecular-weight polyethylene with [η] of 7.0 dl/g, 12.8% by weight of a high-density polyethylene with [η] of 2.8 dl/g and 48% by weight of dioctyl phthalate (DOP) were mixed using Henschel mixer. The mixture was then kneaded and extruded with a twin-screw extruder, cooled, and palletized with pelletizer into a pellet material.

This pellet material was kneaded and extruded with a twin-screw extruder equipped with a T die into a sheet 90 μm thick in the same manner as in Example 1. From this molded sheet, DOP was extracted and removed with methylene chloride and the silica powder was also extracted and removed with sodium hydroxide to produce a microporous membrane. Two sheets of the microporous membranes were superposed, stretched lengthwise to 4.5 times while heating at 110°C, and stretched widthwise to 2.0 times while heating at 130°C. The physical properties of the resultant membrane are shown in Table 2.

[Example 10]

A microporous membrane was produced in the same manner as in Example 1, except that silica powder D was used, which was prepared by a wet process, ground and classified, and had an average dispersion particle size of 0.60 $\mu$m, a 95 vol% cumulative dispersion particle size of 0.85 $\mu$m, a 5 vol% cumulative dispersion particle size of 0.42 $\mu$m, a ratio of cumulative dispersion particle size of 2.0, oil absorption of 200 ml/100 g and a primary particle size of 15 nm (see Table 1). The physical properties of the resultant membrane are shown in Table 2. The battery evaluation was also performed using this membrane. The results of the battery evaluation are also shown in Table 2.

[Example 11]

A microporous membrane was produced in the same manner as in Example 5, except that silica powder E was used, which was prepared by a wet process, ground and classified, and had an average dispersion particle size of 0.80 $\mu$m, a 95 vol% cumulative dispersion particle size of 2.38 $\mu$m, a 5 vol% cumulative dispersion particle size of 0.49 $\mu$m, a ratio of cumulative dispersion particle size of 4.9, oil absorption of 200 ml/100 g and a primary particle size of 15 nm (see Table 1). The physical properties of the resultant membrane are shown in Table 2. The battery evaluation was also conducted using this membrane. The results of the battery evaluation are also shown in Table 2.

[Example 12]

Two sheets of the membranes, where the silica powder had been extracted, produced in the same manner as in Example 11 were superposed, stretched lengthwise to 5.5 times while heating at 115°C, and stretched widthwise to 2.0 times while heating at 122°C. The physical properties of the resultant membrane are shown in Table 2.

[Example 13]

A microporous membrane was produced in the same manner as in Example 7 using the same silica powder E as used in Example 11. The physical properties of the resultant membrane are shown in Table 2.

[Example 14]

A microporous membrane was produced in the same manner as in Example 5, except that silica powder F was used, which was prepared by a wet process, ground and classified, and had an average dispersion particle size of 1.70 $\mu$m, a 95 vol% cumulative dispersion particle size of 4.32 $\mu$m, a 5 vol% cumulative dispersion particle size of 0.64 $\mu$m, a ratio of cumulative dispersion particle size of 6.8, oil absorption of 200 ml/100 g and a primary particle size of 15 nm (see Table 1). The physical properties of the resultant membrane are shown in Table 2.

[Comparative Example 1]

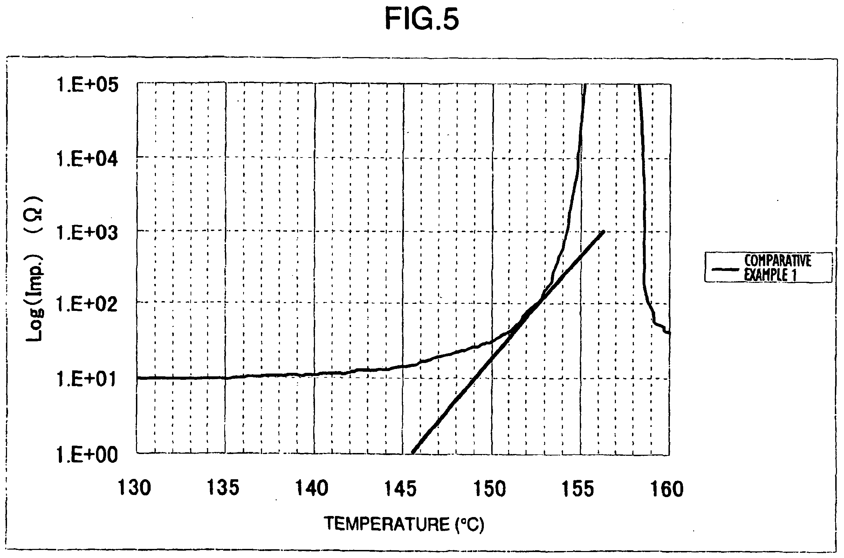

A microporous membrane was produced in the same manner as in Example 1, except that silica powder G was used, which was prepared by a wet process and had an average dispersion particle size of 7.10 $\mu$m, a 95 vol% cumulative dispersion particle size of 10.10 $\mu$m, a 5 vol% cumulative dispersion particle size of 2.5 $\mu$m, a ratio of cumulative dispersion particle size of 4.0, oil absorption of 190 ml/100 g and a primary particle size of 20 nm (see Table 1). The physical properties of the resultant membrane are shown in Table 2. The chart of the temperature measured during shut down of the membrane is shown in Figs. 3, 5. The battery evaluation was also conducted using this membrane. The results of the battery evaluation are also shown in Table 2.

[Comparative Example 2]

A microporous membrane was produced in the same manner as in Example 1, except that silica powder H was used, which was prepared by a wet process and had an average dispersion particle size of 2.08 $\mu$m, a 95 vol% cumulative dispersion particle size of 6.40 $\mu$m, a 5 vol% cumulative dispersion particle size of 0.48 $\mu$m, a ratio of cumulative dispersion particle size of 13.3, oil absorption of 220 ml/100 g and a primary particle size of 15 nm (Nipsil N-41 manufactured by TOSOH SILICA CORPORATION) (see Table 1). The physical properties of the resultant membrane are shown in Table 2.

[Comparative Example 3]

A microporous membrane was produced in the same manner as in Example 5, except that silica powder I was used, which was prepared by a wet process and had an average dispersion particle size of 0.71 $\mu$m, a 95 vol% cumulative dispersion particle size of 14.14 $\mu$m, a 5 vol% cumulative dispersion particle size of 0.49 $\mu$m, a ratio of cumulative dispersion particle size of 28.9, oil absorption of 240 ml/100 g and a primary particle size of 20 nm (Nipsil LP manufactured by TOSOH SILICA CORPORATION) (see Table 1). The physical properties of the resultant membrane are shown in Table 2. The battery evaluation was also conducted using this membrane. The results of the battery evaluation are also shown in Table 2.

[Comparative Example 4]

A microporous membrane was produced in the same manner as in Example 5, except that silica powder J was used, which was prepared by a wet process and had an average dispersion particle size of 5.32 $\mu$m, a 95 vol% cumulative dispersion particle size of 16.26 $\mu$m, a 5 vol% cumulative dispersion particle size of 0.49 $\mu$m, a ratio of cumulative dispersion particle size of 33.2, oil absorption of 240 ml/100 g and a primary particle size of 16 nm (Nipsil VN manufactured by TOSOH SILICA CORPORATION) (see Table 1). The physical properties of the resultant membrane are shown in Table 2.

[Comparative Example 5]

60% by weight of an ultra-high-molecular-weight polyethylene with [$\eta$] of 13.1 dl/g and 40% by weight of a high-density polyethylene with [$\eta$] of 2.8 dl/g were dry blended with a tumble blender. 45% by weight of the resultant polyethylene mixture and 55% by weight of liquid paraffin were kneaded and extruded with a twin-screw extruder equipped with a T die into a gel sheet 1850 $\mu$m thick.
The gel sheet was then introduced into a simultaneous biaxial tenter stretching machine and subjected to biaxial stretching at a stretching ratio of 7 x 7 while heating at 115°C. Subsequently, the stretched sheet was sufficiently immersed in methylene chloride to extract and remove liquid paraffin, thereby producing a microporous membrane. The physical properties of the resultant membrane are shown in Table 2. The battery evaluation was also conducted using this membrane. The results of the battery evaluation are also shown in Table 2.

[Comparative Example 6]

2% by weight of an ultra-high-molecular-weight polyethylene with [$\eta$] of 7.0 dl/g, 13% by weight of a high-density polyethylene with [$\eta$] of 3.6 dl/g and 85% by weight of liquid paraffin were mixed, and the mixture was filled into an autoclave and stirred at 200°C for 90 minutes to obtain a polymer solution. The polymer solution was subjected to biaxial stretching at a stretching ratio of 5 x 5 in the same manner as in Comparative Example 3 to obtain a membrane from which liquid paraffin had been extracted. This membrane was then stretched widthwise to 1.5 time while heating at 95°C. The physical properties of the resultant membrane are shown in Table 2. The battery evaluation was also conducted using this membrane. The results of the battery evaluation are also shown in Table 2.

[Table 1]

| | | Characteristics of silica powder | | | | | |
|---|---|---|---|---|---|---|---|
| | | Average dispersion particle size ($\mu$m) | 95 vol% cumulative dispersion particle size ($\mu$m) | 5 vol% cumulative dispersion particle size ($\mu$m) | Ratio of cumulative dispersion particle size (-) | Oil absorption (ml/100g) | Primary particle size (nm) |
| Silica A | | 0.25 | 0.45 | 0.15 | 3.0 | 240 | 12 |
| Silica B | | 0.30 | 0.50 | 0.13 | 3.8 | 220 | 20 |
| Silica C | | 0.27 | 0.55 | 0.16 | 3.4 | 280 | 12 |
| Silica D | | 0.60 | 0.85 | 0.42 | 2.0 | 200 | 15 |

(continued)

| | Characteristics of silica powder | | | | | |
|---|---|---|---|---|---|---|
| | Average dispersion particle size (μm) | 95 vol% cumulative dispersion particle size (μm) | 5 vol% cumulative dispersion particle size (μm) | Ratio of cumulative dispersion particle size (-) | Oil absorption (ml/100g) | Primary particle size (nm) |
| Silica E | 0.80 | 2.38 | 0.49 | 4.9 | 200 | 15 |
| Silica F | 1.70 | 4.32 | 0.64 | 6.8 | 200 | 15 |
| Silica G | 7.10 | 10.10 | 2.50 | 4.0 | 190 | 20 |
| Silica H | 2.08 | 6.40 | 0.48 | 13.3 | 220 | 15 |
| Silica I | 0.71 | 14.14 | 0.49 | 28.9 | 240 | 20 |
| Silica J | 5.32 | 16.26 | 0.49 | 33.2 | 240 | 16 |

[Table 2]

| | Silica used | Characteristics of microporous membrane | | | | | | | | |
|---|---|---|---|---|---|---|---|---|---|---|
| | | Membrane thickness (μm) | Void content (%) | Gas transmission rate (sec/100cc) | Piercing strength in terms of 20μ (N) | Maximum pore size (μm) | Average pore size (μm) | Pore size ratio (maximum/ average) (-) | Electric resistance (Ω • m²) | |
| Example 1 | A | 18 | 46 | 100 | 4.8 | 0.134 | 0.098 | 1.37 | 0.9 | |
| Example 2 | A | 15 | 45 | 95 | 5.3 | 0.137 | 0.101 | 1.36 | 0.8 | |
| Example 3 | A | 10 | 44 | 80 | 6.0 | 0.122 | 0.095 | 1.28 | 0.8 | |
| Example 4 | A | 20 | 46 | 110 | 4.5 | 0.134 | 0.097 | 1.38 | 0.9 | |
| Example 5 | A | 18 | 45 | 110 | 4.7 | 0.128 | 0.099 | 1.29 | 0.9 | |
| Example 6 | A | 15 | 43 | 100 | 5.2 | 0.125 | 0.098 | 1.28 | 0.8 | |
| Example 7 | A | 18 | 45 | 80 | 4.1 | 0.130 | 0.105 | 1.24 | 0.8 | |
| Example 8 | B | 18 | 45 | 110 | 4.6 | 0.132 | 0.100 | 1.32 | 0.9 | |
| Example 9 | C | 18 | 46 | 120 | 4.8 | 0.126 | 0.093 | 1.36 | 0.9 | |
| Example 10 | D | 18 | 47 | 95 | 4.6 | 0.146 | 0.104 | 1.40 | 0.9 | |
| Example 11 | E | 18 | 45 | 105 | 4.6 | 0.138 | 0.100 | 1.38 | 0.9 | |
| Example 12 | E | 15 | 44 | 95 | 5.1 | 0.135 | 0.103 | 1.31 | 0.8 | |
| Example 13 | E | 18 | 45 | 100 | 4.3 | 0.138 | 0.102 | 1.35 | 0.9 | |
| Example 14 | F | 18 | 46 | 80 | 4.0 | 0.150 | 0.108 | 1.39 | 0.8 | |
| Comparative Example 1 | G | 18 | 52 | 50 | 3.2 | 0.223 | 0.150 | 1.49 | 0.7 | |
| Comparative Example 2 | H | 18 | 49 | 95 | 3.5 | 0.176 | 0.100 | 1.76 | 1.1 | |
| Comparative Example 3 | I | 18 | 48 | 90 | 3.4 | 0.163 | 0.105 | 1.55 | 0.9 | |
| Comparative Example 4 | J | 18 | 51 | 80 | 3.3 | 0.186 | 0.112 | 1.66 | 1.0 | |
| Comparative Example 5 | - | 20 | 43 | 350 | 4.5 | 0.06 or less | 0.05 or less | - | 1.2 | |
| Comparative Example 6 | - | 15 | 55 | 180 | 3.0 | 0.06 or less | 0.05 or less | - | 1.1 | |

[Table 2] (Continued)

| | Characteristics of microporous membrane | | | Battery performance | |
|---|---|---|---|---|---|
| | Temperature during SD (°C) | Intrinsic viscosity (dl/g) | Withstand voltage in terms of 20 μ (KV) | Cycle performance (%) | Withstand voltage (V) |
| Example 1 | 2.5 | 4.9 | 1.35 | 90 | 1.25 |
| Example 2 | 3.0 | 4.9 | 1.40 | - | - |
| Example 3 | 4.0 | 4.9 | 1.50 | - | - |
| Example 4 | 3.0 | 4.5 | 1.35 | - | - |
| Example 5 | 2.0 | 4.5 | 1.40 | 90 | 1.30 |
| Example 6 | 3.0 | 4.5 | 1.50 | - | - |
| Example 7 | 2.0 | 3.6 | 1.45 | - | - |
| Example 8 | 2.0 | 4.5 | 1.35 | 90 | 1.20 |
| Example 9 | 2.5 | 4.9 | 1.35 | 90 | 1.20 |
| Example 10 | 3.0 | 4.9 | 1.30 | 90 | 1.20 |
| Example 11 | 2.5 | 4.5 | 1.30 | - | - |
| Example 12 | 3.0 | 4.5 | 1.35 | - | - |
| Example 13 | 2.0 | 3.6 | 1.30 | - | - |
| Example 14 | 4.0 | 4.5 | 1.20 | 90 | - |
| Comparative Example 1 | 10.5 | 4.9 | 0.70 | 90 | 0.60 |
| Comparative Example 2 | 9.0 | 4.9 | 1.00 | - | - |
| Comparative Example 3 | 7.5 | 4.5 | 1.00 | 90 | 0.80 |
| Comparative Example 4 | 8.0 | 4.5 | 0.70 | - | - |
| Comparative Example 5 | 3.0 | 4.9 | 1.30 | 60 | 1.20 |
| Comparative Example 6 | 3.0 | 5.1 | 1.20 | 70 | 1.05 |

INDUSTRIAL APPLICABILITY

The thin polyolefin microporous membrane excellent in permeability, high strength and safety according to the present invention is preferably used for electronic components, particularly as a separator for nonaqueous electrolyte batteries. The microporous membrane is particularly suitably used as a separator for high-capacity nonaqueous electrolyte batteries that is required to be thin. Using this microporous membrane as a separator makes it possible to obtain non-aqueous electrolyte batteries having high capacity, long life and high safety.

Claims

1.  A polyolefin microporous membrane having a membrane thickness of 1 to 30 μm, a void content of 30 to 60%, a piercing strength of 3.5 to 20.0 N/(20 μm), a maximum pore size determined by the bubble point method of 0.08 to 0.20μm, **characterized in that** the membrane has a gas transmission rate of 5000 to 25000 sec/m³ (50 to 250 sec/100 cc),and a ratio of the maximum pore size to the average pore size (the maximum pore size/the average pore size) of 1.00 to 1.40, wherein the void content is calculated from the following equation: void content (%) =

[{volume (cm$^3$) - (mass (g)/density of said polyethylene (g/cm$^3$))}/volume (cm$^3$)] x 100; the gas transmission rate is measured in accordance with JIS p-8117; the piercing strength is measured under the conditions where the radius of curvature of the needle is 0.5 mm and the piercing speed is 2 mm/sec; the maximum pore size is calculated in accordance with ASTM E-128-61 using the value of the bubble point in ethanol; and the average pore size is measured by the half-dry method and is calculated in accordance with ASTM F-316-86 using ethanol.

2. Use of the polyolefin microporous membrane according to claim 1, in electronic components.

3. Use of the polyolefin microporous membrane according to claim 1 as a polyolefin separator for nonaqueous electrolyte batteries.

4. A nonaqueous electrolyte battery comprising a separator, **characterized in that** the polyolefin microporous membrane according to claim 1 is used as the separator.

5. A method for producing a polyolefin microporous membrane as defined in claim 1 comprising: providing a mixture of polyolefin resin, a plasticizer and an inorganic powder wherein in the total amount of these three components, the content of the polyolefin resin is 10 to 50 % by weight, the content of the plasticizer is 30 to 70 % by weight and the content of the inorganic powder is 5 to 40 % by weight; molding said mixture into a sheet while kneading and heat melting the mixture; extracting and removing the plasticizer and the inorganic powder from the sheet, respectively; and stretching the sheet at least uniaxially, wherein the inorganic powder has an average dispersion particle size of 0.01 to 5 μm and the ratio of the 95 vol% cumulative dispersion particle size and the 5 vol% cumulative dispersion particle size is 1.0 to 10.0, wherein the average dispersion particle size of the inorganic powder is measured using a laser diffraction particle size analyser under the following conditions: solvent of 86.4% ethanol, 7.3% methanol, water 6.3%; dispersion conditions of 40 W ultrasonics for 10 minutes while stirring at 200 rpm; set value of refractive index of silica: real part 1.40, imaginary part 0; measuring temperature of 25°C.

6. The method according to claim 5, wherein the inorganic powder is silica powder.

7. The method according to claim 5, wherein the inorganic powder is silica powder prepared by a dry process.

## Patentansprüche

1. Mikroporöse Polyolefinmembran mit einer Membrandicke von 1 bis 30 μm, einem Hohlraumgehalt von 30 bis 60%, einer Durchstechfestigkeit von 3,5 bis 20,0 N/(20 μm) und einer durch das Blasenpunktverfahren bestimmten maximalen Porengröße von 0,08 bis 0,20 μm, **dadurch gekennzeichnet, dass** die Membran eine Gastransmissionsrate von 5000 bis 25 000 s/m$^3$ (50 bis 250 s/100 cm$^3$) und ein Verhältnis der maximalen Porengröße zur mittleren Porengröße (maximale Porengröße/mittlere Porengröße) von 1,00 bis 1,40 aufweist, wobei der Hohlraumgehalt anhand der folgenden Gleichung berechnet wird: Hohlraumgehalt (%) = [{Volumen (cm$^3$) - (Masse (g)/Dichte des Polyethylens (g/cm$^3$))}/Volumen (cm$^3$)] x 100, die Gastransmissionsrate gemäß JIS p-8117 gemessen wird, die Durchstechfestigkeit unter den Bedingungen, dass der Krümmungsradius der Nadel 0,5 mm beträgt und die Durchstechgeschwindigkeit 2 mm/s beträgt, gemessen wird, die maximale Porengröße gemäß ASTM E-128-61 unter Verwendung des Werts des Blasenpunkts in Ethanol berechnet wird und die mittlere Porengröße unter Verwendung von Ethanol nach dem Halbtrockenverfahren gemessen wird und gemäß ASTM F-316-86 berechnet wird.

2. Verwendung der mikroporösen Polyolefinmembran gemäß Anspruch 1 in elektronischen Komponenten.

3. Verwendung der mikroporösen Polyolefinmembran gemäß Anspruch 1 als Polyolefin-Separator für Batterien mit nichtwässrigem Elektrolyt.

4. Batterie mit nichtwässrigem Elektrolyt, die einen Separator umfasst, **dadurch gekennzeichnet, dass** die mikroporöse Polyolefinmembran gemäß Anspruch 1 als Separator verwendet wird.

5. Verfahren zur Herstellung einer mikroporösen Polyolefinmembran gemäß Anspruch 1, umfassend: Bereitstellen eines Gemischs aus einem Polyolefinharz, einem Weichmacher und einem anorganischen Pulver, wobei in der Gesamtmenge dieser drei Komponenten der Gehalt des Polyolefinharzes 10 bis 50 Gew.-% beträgt, der Gehalt des Weichmachers 30 bis 70 Gew.-% beträgt und der Gehalt des anorganischen Pulvers 5 bis 40 Gew.-% beträgt; Formen des Gemischs zu einer Bahn, während das Gemisch geknetet und heißgeschmolzen wird; Extrahieren des Weichmachers und Entfernen des anorganischen Pulvers aus der Bahn; und Strecken der Bahn wenigstens uniaxial, wobei das anorganische Pulver eine mittlere Dispersionsteilchengröße von 0,01 bis 5 $\mu$m aufweist und das Verhältnis der 95-Vol.-%-kumulativen Dispersionsteilchengröße zur 5-Vol.-%-kumulativen Dispersionsteilchengröße 1,0 bis 10,0 beträgt, wobei die mittlere Dispersionsteilchengröße des anorganischen Pulvers mit Hilfe eines Laserbeugungs-Teilchengrößenanalysators unter den folgenden Bedingungen gemessen wird: Lösungsmittel aus 86,4% Ethanol, 7,3% Methanol, 6,3% Wasser; Dispersionsbedingungen von 40 W Ultraschall während 10 Minuten unter Rühren bei 200 U/min; Sollwert für Brechungsindex von Siliciumoxid: Realteil 1,40, Imaginärteil 0; Messtemperatur 25 °C.

**6.** Verfahren gemäß Anspruch 5, wobei das anorganische Pulver Siliciumoxidpulver ist.

**7.** Verfahren gemäß Anspruch 5, wobei das anorganische Pulver durch ein Trockenverfahren hergestelltes Siliciumoxidpulver ist.

## Revendications

**1.** Membrane microporeuse de polyoléfine ayant une épaisseur de membrane de 1 à 30 $\mu$m, une teneur en vide de 30 à 60 %, une résistance au perçage de 3,5 à 20,0 N/(20$\mu$m), une taille maximale de pore déterminée par le procédé au point de bulle de 0,08 à 0,20 $\mu$m, **caractérisée en ce que** la membrane présente une vitesse de transmission de gaz de 5 000 à 25 000 s/m$^3$ (50 à 250 s/100 cm$^3$) et un rapport de la taille maximale de pore à la taille moyenne de pore (la taille maximale de pore/la taille moyenne de pore) de 1,00 à 1,40 où la teneur en vide est calculée à partir de l'équation suivante : teneur en vide (%) = [{volume (cm$^3$) - (masse (g)/densité de ladite polyoléfine (g/cm$^3$))}/ volume (cm$^3$)]] x 100 ; la vitesse de transmission du gaz est mesurée selon JIS p-8117 ; la résistance au perçage est mesurée dans les conditions où le rayon de courbure de l'aiguille est de 0,5 mm et la vitesse de perçage est de 2 mm/s ; la taille maximale de pore est calculée conformément à ASTM E-128-61 en utilisant la valeur de point de bulle dans l'éthanol ; et la taille moyenne de pore est mesurée par le procédé semi-sec et est calculée conformément à ASTM F-316-86 en utilisant l'éthanol.

**2.** Utilisation de la membrane microporeuse en polyoléfine selon la revendication 1 dans des constituants électroniques.

**3.** Utilisation de la membrane microporeuse de polyoléfine selon la revendication 1 comme séparateur en polyoléfine pour des accumulateurs à électrolyte non aqueux.

**4.** Accumulateur à électrolyte non aqueux comprenant un séparateur, **caractérisé en ce que** la membrane microporeuse en polyoléfine selon la revendication 1 est utilisée comme séparateur.

**5.** Procédé de production d'une membrane microporeuse en polyoléfine selon la revendication 1 comprenant : la fourniture d'un mélange de résine de polyoléfine, d'un plastifiant et d'une poudre inorganique où dans la quantité totale de ces trois constituants, la teneur de la résine de polyoléfine est de 10 à 50 % en masse, la teneur du plastifiant est de 30 à 70 % en masse et la teneur de la poudre inorganique est de 5 à 40 % en masse ; le moulage dudit mélange en une feuille tout en malaxant et en faisant fondre à la chaleur le mélange ; l'extraction et l'élimination du plastifiant et de la poudre inorganique de la feuille, respectivement ; et l'étirage de la feuille au moins uniaxialement, dans lequel la poudre inorganique présente une taille moyenne de particule de dispersion de 0,01 à 5 $\mu$m et le rapport de la taille de particule de dispersion cumulée à 95 % en volume et de la taille de particule de dispersion cumulée à 5 % en volume est de 1,0 à 10,0, dans lequel la taille moyenne de particule de dispersion de la poudre inorganique est mesurée en utilisant un dispositif d'analyse de taille de particule à diffraction laser dans les conditions suivantes : solvant de 86,4 % d'éthanol, 7,3 % de méthanol, 6,3 % d'eau ; conditions de dispersion d'ultrasons 40 W pendant 10 minutes tout en agitant à 200 tr/min ; valeur fixée de l'indice de réfraction de la silice : part réelle 1,40, part imaginaire 0 ; température de mesure de 25°C.

**6.** Procédé selon la revendication 5, dans lequel la poudre inorganique est de la poudre de silice.

**7.** Procédé selon la revendication 5, dans lequel la poudre inorganique est de la poudre de silice préparée par un procédé par voie sèche.

# FIG.1

SLIDE GLASS

TEFLON TAPE

10mm × 10mm

NICKEL FOIL

# FIG.2

SILICON RUBBER

NICKEL FOIL

CERAMIC PLATE

HYDRAULIC PRESS

MICROPOROUS MEMBRANE

SLIDE GLASS WITH NICKEL FOIL

THERMOCOUPLE

HOT PLATE

# FIG.3

# FIG.4

EP 1 698 656 B2

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3347835 B
- JP 2657430 B
- JP 58019689 B
- JP 2835365 B
- JP 2002088188 A

- JP 3121047 B
- JP 63251436 B
- US 4833172 A
- JP 2001081221 B